# EUROPÄISCHE PATENTSCHRIFT

(11) **EP 0 793 572 B1**
(45) Veröffentlichungstag und Bekanntmachung des Hinweises auf die Patenterteilung: **07.01.1999**
(21) Anmeldenummer: 95940983.0
(22) Anmeldetag: 14.11.1995
(51) Int. Cl.: B29C 65/20

(54) **VORRICHTUNG UND VERFAHREN ZUM STUMPFSCHWEISSEN VON ROHREN AUS THERMOPLASTISCHEM KUNSTSTOFF**
BUTT-WELDING DEVICE AND PROCESS FOR PIPES MADE OF THERMOPLASTIC MATERIALS
DISPOSITIF ET PROCEDE DE SOUDAGE BOUT A BOUT DE TUYAU EN MATIERES THERMOPLASTIQUES

(30) Priorität: 21.11.1994 DE 4441135; 03.10.1995 DE 19536857
(43) Veröffentlichungstag der Anmeldung: 10.09.1997
(73) Patentinhaber: Omicron s.r.l., 35030 Caselle di Selvazzano (Padova) (IT)
(72) Erfinder: RICHTER, Ulrike, D-36399 Freiensteinau (DE); HUFNAGEL, Wilfried, A-1130 Wien (AT)
(74) Vertreter: Petraz, Gilberto Luigi
(86) Internationale Anmeldenummer: EP9504469
(87) Internationale Veröffentlichungsnummer: WO9615898

(56) Entgegenhaltungen:
- EP-A- 0 278 185
- EP-A- 0 290 651
- EP-A- 0 421 019
- EP-A- 0 663 279
- WO-A-92/09419
- DE-A- 4 026 711
- US-A- 4 587 469
- PATENT ABSTRACTS OF JAPAN vol. 10 no. 270 (M-517) [2326] ,13.September 1986 & JP,A,61 094741 (RETSUKISU K. K. K.) 13.Mai 1986,
- PATENT ABSTRACTS OF JAPAN vol. 11 no. 90 (M-573) ,20.März 1987 & JP,A,61 242793 (MITSUBISHI ELECTRIC CORP.) 20.Oktober 1986,

## Beschreibung

Die Erfindung betrifft eine Vorrichtung gemäß dem Oberbegriff des Anspruchs 1 und ein Verfahren gemäß dem Oberbegriff des Anspruchs 2 zum Stumpfschweißen von Rohren aus thermoplastischem Kunststoff.

Eine solche Vorrichtung und ein solches Verfahren sind aus der DE-A-40 26 711 bekannt.

Es ist bekannt, in einer Werkstatt zwei Kunststoffrohre miteinander stumpf zu verschweißen, indem das eine auf einem horizontal verfahrbaren Schlitten aufgespannte, am vorderen Ende auf eine Schweißtemperatur von z.B. 190 bis 225° erwärmte Rohr durch einen von einer Bedienungsperson steuerbaren Elektromotor gegen das ebenfalls auf Schweißtemperatur erwärmten Ende des anderen Rohres gefahren wird. Bei der bekannten Vorrichtung ist das zuletzt genannte Rohr unter Zwischenschaltung einer Kraftmeßeinrichtung an einem festen Widerlager abgestützt. Diese Anordnung erlaubt eine sehr genaue Messung der Anpreßkraft der Rohre, weil die Anpreßkraft getrennt von anderen Kräften gemessen wird, ist aber nur für das Verschweißen einzelner Rohrstücke, nicht für die Verlegung einer langen Rohrleitung geeignet.

Bei der aus der DE-A-40 26 711 bekannten Vorrichtung zum Verschweissen von Werkstücken aus Kunststoff in einer Werkstatt werden beide Werkstücke jeweils durch einen auf einem gemeinsamen Bett mitteils eines separaten Schrittmotors angetriebenen Schlitten gegen ein Heizelement und dann gegeneinander verfahren. Die Reaktionskraft jedes Antriebs ist jeweils am Bett abgestützt. Die Aufspannung der Werkstücke auf den Schlitten weist auf beiden Seiten ein Federglied auf, dessen Auslenkung ein Maß für die auf das jeweilige Werkstück wirkende Schubkraft ist. Wenn die Reibungsverhältnisse auf beiden Seiten verschieden sind, ergeben sich unterschiedliche Schubkräfte, und die Fügekraft ist von der unbekannten Reibung auf beiden Seiten abhängig. Die Verwendung von Schrittmotoren hat den weiteren Nachteil, daß sie mit einem konstruktiv vorgegebenen festen Drehmoment arbeiten. Man kann daher nur die Zahl der Schritte pro Zeiteinheit, d. h. die Geschwindigkeit, oder insgesamt, d. h. den Weg, nicht aber das Drehmoment steuern. Für den Einsatz beim Verlegen von Rohren im freien Gelände, wo unterschiedliche Rohrlängen, Steigungen und Reibungsverhältnisse auftreten, ist die bekannte Vorrichtung ungeeignet. Infolge des doppelten steuerbaren Antriebs ist sie außerdem verhältnismäßig kompliziert und teuer.

Beim Verlegen z.B. einer Gasleitung durch Verschweißen von PE-, PP- oder PVDF-Rohren im Feld herrschen andere Bedingungen als beim Schweißen einzelner Nähte in einer Werkstatt, und diese Umgebungsbedingungen ändern sich ständig Das Ende des bereits verlegten, langen Rohrstrangs liegt fest, während das weitere, an den Strang anzuschließende Rohrstück je nach Gelände horizontal, mit Gefälle oder zur Schweißstelle ansteigend auf wechselndem Untergrund liegt und dementsprechend mit einer in weitem Maße schwankenden Zug- oder Stützkraft an die Schweißstelle heranzuführen und dann mit einem vorbestimmten Kraftverlauf erst gegen eine Heizeinrichtung sowie anschließend gegen das Ende des Rohrstrangs anzudrücken ist.

Für den Einsatz im Feld verwendet man bisher ausschließlich Stumpfschweißvorrichtungen mit hydraulischen Spanneinrichtungen. Hierfür dürfte ausschlaggebend gewesen sein, daß die zu verschweißenden Rohre normalerweise in einem sehr schmalen Graben liegen, dessen Querschnitt ein wesentlicher Kostenfaktor ist. Bei den hydraulischen Spannvorrichtungen kann das Antriebsaggregat außerhalb des Grabens aufgestellt werden. Im Graben braucht man lediglich axial zwischen den die Rohrenden umspannenden Klemmbügeln zwei Kraftzylinder, die ihre Kraft unmittelbar auf die relativ zueinander zu bewegenden Teile ausüben, also keine umlaufenden, an ihren Berührungsflächen schmutzempfindlichen Drehmomentübertragungsglieder eines mechanischen Transmissions- oder Antriebsstrangs. Außerdem hat die Spannvorrichtung im wesentlichen die Funktion, die beiden Rohrenden über längere Zeit im Ruhezustand gegen die Heizeinrichtung bzw. gegeneinander zu drücken. Dafür bietet sich ein hydraulischer Druckerzeuger eher an als ein elektrischer Bewegungsantrieb. Schließlich ist die Druckmessung mittels Manometer oder eines anderen Druckmeßinstruments an der Auslaßleitung der Pumpe sehr einfach und zweckmäßig, weil sich dort bei den üblichen, von Hand gesteuerten Vorrichtungen in unmittelbarer Nähe auch der Steuerhebel für die Drucksteuerung befindet. Ebenso wie bei den weiterhin bekannten, programmgeregelten, hydraulischen Stumpfschweißvorrichtungen, bei denen die Druckmeßeinrichtung gleichfalls am Pumpenauslaß angeordnet ist, bedarf es keiner Meßsignal- und Steuerleitungen zwischen der Spannvorrichtung im Graben und der Steuer- bzw. Regeleinrichtung außerhalb des Grabens.

Mangelhaft ist bisher die Genauigkeit der Steuerung und Regelung der bekannten Stumpfschweißvorrichtungen. Wegen der von defekten Schweißnähten ausgehenden Gefahr sind die Anforderungen hoch, wie sich aus der nachstehenden Beschreibung der notwendigen Funktionen einer solchen Vorrichtung ergibt.

Nach dem Ausrichten und Einspannen der zu verschweißenden Rohrenden in die Schweißvorrichtung muß das an den bereits vorhandenen Rohrstrang anzuschweißende Rohrstück von zum Beispiel 6 m oder einer noch größeren Länge normalerweise mit einer Kraft von mehreren 100 N, bei großen Rohren auch mehreren 1000 N zum Ende des Rohrstrangs hin gezogen werden. An Abhängen kann es aber auch vorkommen, daß das Rohrstück die Tendenz hat, infolge der Schwerkraft gegen das Ende des Rohrstrangs zu rutschen. Es muß dann ggf. durch eine entgegengerichtete Stützkraft gehalten werden.

Zur Vorbereitung der Schweißstelle wird ein motorisch angetriebener, rotierender Hobel zwischen den Rohrenden axial verschieblich in die Spannvorrichtung eingesetzt und durch axiales Andrücken des anzuschweißenden Rohrstücks auch gegen das Ende des Rohrstrangs gedrückt. Bei einem bestimmten Andruck erzeugt der umlaufende Hobel im wesentlichen planparallele Stirnflächen an den Rohrenden, es verbleibt aber zumindest dort, wo der Span zum Schluß aufhört, eine Ungleichmäßigkeit.

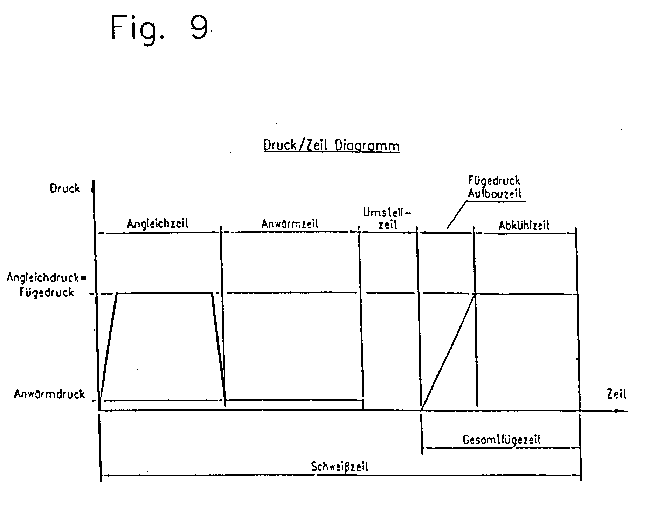

Für den weiteren Arbeitsvorgang sei auf Fig. 9 Bezug genommen. Nach dem Entfernen des Hobels wird eine scheibenförmige Heizeinrichtung zwischen den Rohrenden axial verschieblich in die Spannvorrichtung eingesetzt und durch axiales Andrücken des anzuschweißenden Rohrstücks auch gegen das Ende des Rohrstrangs gedrückt. Während einer bestimmten Zeitdauer, die als Angleichzeit bezeichnet wird, soll die heiße Heizplatte verhältnismäßig stark gegen die gehobelten Stirnflächen der Rohrenden angepreßt werden, um mit Sicherheit die am Ende des vorangegangenen spanabhebenden Vorgangs verbliebene Ungleichmäßigkeit zu beseitigen und die erwärmten Stirnflächen optimal planparallel anzugleichen. Der Angleichdruck kann die Größenordnung des nachfolgend aufzubringenden Fügedrucks, z. B. 0,15 N/mm² Stirnfläche bei PE-Rohren haben. Wie das Druck/Zeit-Diagramm nach Fig. 9 zeigt, muß dann aber der Andruck gegen die Heizplatte reduziert werden auf den sehr kleinen Wert von z.B. 0,01 - 0,02 N/mm2, der nur noch die zuverlässige Anlage an der Heizplatte gewährleisten soll, damit während einer bestimmten Anwärmzeit das Material bis auf eine bestimmte Tiefe erwärmt, aber nicht verdrängt wird. Die Schweißvorschriften verlangen, daß die Abweichungen sowohl vom vorbestimmten hohen Druck während der Angleichzeit als auch vom niedrigen Druck während der Anwärmzeit höchstens 7 % betragen dürfen. Diese enge Begrenzung gilt auch nachfolgend für den Fügedruck, wobei erschwerend hinzukommt, daß eine bestimmte Vorrichtung zum Verlegen von Rohren mit unterschiedlichen Dicken und Durchmessern verwendet wird und die geforderte Genauigkeit im gesamten Arbeitsbereich einhalten muß.

Um eine unzulässige Abkühlung der auf Schweißtemperatur erwärmten Rohrenden zu vermeiden, muß nach der Anwärmzeit innerhalb einer kurzen Umstellzeit das anzuschweißende Rohrstück ein wenig zurückgezogen, die Heizplatte entfernt und das Rohrstück mit seiner vorderen Stirnfläche gegen die Endfläche des Rohrstrangs angedrückt werden, wobei gemäß Fig. 9 der Gradient des Druckanstiegs festgelegt ist. Wenn der Fügedruck erreicht ist, muß er während der Abkühlzeit konstant aufrechterhalten werden. Je nach Material, Temperatur und Druck wird beim Fügen mehr oder weniger Material verdrängt, so daß eine gewisse Relativbewegung zwischen den zu verschweißenden Rohren stattfindet.

Der Erfindung liegt die Aufgabe zugrunde, eine Vorrichtung der eingangs genannten Art zu schaffen, die nicht nur in der Werkstatt, sondern auch bei der Rohrverlegung im Feld einsetzbar ist und aufgrund ihres Funktionsprinzips bessere Voraussetzungen bietet, die für das Erwärmen und Fügen der Rohrenden vorgegebenen Druckverläufe möglichst genau einzuhalten.

Vorstehende Aufgabe wird durch eine Vorrichtung gemäß Anspruch 1 gelöst.

Die Anwendbarkeit der neuen Vorrichtung für die Rohrverlegung im Freien wird dadurch gewonnen, daß, anders als bei den bekannten Schweißvorrichtungen mit elektromechanischem Antrieb für die Werkstatt, die Reaktionskraft des Vorschubs am ortsfesten Rohrstrang abgestützt wird und die Meßeinrichtung an einem mechanischen Antriebsorgan zwischen dem ortsfesten Rohrstrang und der motorisch verfahrbaren Rohrspanneinheit angeordnet ist. Sie mißt dort zwar nicht allein die zwischen den Rohrenden wirksame Kraft, sondern überlagert auch die zum Bewegen bzw. Abstützen des an den Rohrstrang anzuschweißenden Rohrstücks erforderliche Kraft, aber diese ist von den den Anwärm- und Fügevorgängen vorangehenden Bewegungen des Rohrstücks bekannt und kann in der Regeleinrichtung von der gemessenen Gesamtkraft subtrahiert werden. In unsicheren Situationen kann eine kurze Zwischenbewegung des Rohrstücks initiiert werden, um noch einmal die Verschiebekraft zu messen, bevor die zur Erreichung eines bestimmten Andrucks des Rohrstücks gegen die Heizplatte oder das Ende des Rohrstrangs notwendige Gesamtkraft ermittelt wird.

Gegenstand der Erfindung ist auch das mit der neuen Vorrichtung ausgeführte Verfahren, wie es im Anspruch 7 definiert ist.

Da ein geschlossener Regelkreis vorgesehen ist, spielt es keine Rolle, daß sich die Meßeinrichtung an der Spannvorrichtung im Graben befindet. Die an einem mechanischen Antriebsorgan, z.B. mittels Dehnungsmeßstreifen, ermittelten Meßwerte müssen für Regelzwecke ohnehin in elektrische Signale umgewandelt werden und können ohne weiteres zusätzlich bei der außerhalb des Grabens aufgestellten Regel- und Steuereinrichtung auf einem Monitor angezeigt werden. Auf jeden Fall sind sie sehr genau, weil sich zwischen dem Meßwertaufnehmer und dem eingespannten Rohrstück nur noch mechanische Antriebselemente und Spannbügel befinden, an denen keine unvorhersehbaren internen oder äußeren Störkräfte auftreten. Vorzugsweise ist der Meßwertaufnehmer sogar zwischen der verfahrbaren Rohrspanneinheit und dem dieser unmittelbar vorgeschalteten mechanischen Antriebsorgan angeordnet, so daß sich zwischen dem Meßwertaufnehmer und der Rohrspanneinheit keine relativ zueinander beweglichen Teile befinden.

Im Vergleich zu den bekannten steuer- oder regelbaren hydraulischen Spannvorrichtungen resultiert der Gewinn an Genauigkeit zu einem wesentlichen Teil daraus, daß dort bisher das Druckmeßgerät am Pumpenauslaß, in Strömungsrichtung vor einem Druckausgleichsbehälter und dem Druckschlauch zu den Kraftzylindern an den Rohrspanneinheiten angeordnet ist. Das hydraulische System reagiert temperaturabhängig und träge, so daß es bei der Regelung mit verhältnismäßig großen Abweichungen um die Sollwerte pendelt. Demgegenüber ist die Regelung eines Elektromotors temperaturunabhängig und reagiert sehr schnell auf Abweichungen vom Sollwert. Der Motor liefert ein bestimmtes Drehmoment über den gesamten Arbeitsbereich und wesentlich schnellere Geschwindigkeitsänderungen als eine hydraulische Vorrichtung, so daß die zur Entfernung der Heizeinrichtung notwendige Umstellzeit zwischen dem Anwärmen und dem Fügen verkürzt und die Abkühlung in dieser Phase verringert werden kann. Weitere Vorteile des elektrischen Antriebs bestehen darin, daß er wartungs- und ölfrei ist.

Die bisherige, verhältnismäßig grobe Steuerung und Regelung basierte ausschließlich auf Druck- bzw. Kraftmessungen. In bevorzugter Ausführung geht die Erfindung einen Schritt weiter und registiert zumindest während des Fügens die Relativbewegung zwischen den Rohrspanneinheiten, um die Meßwerte mit bestimmten Sollwerten zu vergleichen und dadurch eventuelle Fehler der Schweißverbindung automatisch zu entdecken. Die Feststellung des Fügeweges und der Fügegeschwindigkeit mit der notwendigen Genauigkeit bereitet bei einem elektrischen Antrieb keine Schwierigkeiten, weil ein mit dem Motor verbundener Inkrementalgeber bzw. Impulsgeber den Weg in genügend kleine Schritte auflöst. Wenn die Relativbewegung beim Fügen mit dem vorbestimmten Fügedruck zu schnell oder zu langsam und/oder der Fügeweg zu kurz oder zu lang ist, kann ggf. noch durch eine angepaßte Druckänderung das Schweißergebnis korrigiert werden, auf jeden Fall aber geben solche während des Schweißvorgangs festgestellten Unregelmäßigkeiten Veranlassung, die Qualität der Schweißnaht nach Fertigstellung zu überprüfen oder eventuell sogar den Schweißvorgang abzubrechen.

In entsprechender Weise kann auch die Relativbewegung der Rohrspanneinheiten überwacht werden, während die Rohrenden durch axialen Andruck gegen die Heizeinrichtung auf Schweißtemperatur erwärmt werden.

Eine zusätzliche Kontrolle und Sicherheit gegen Meßfehler erhält man in weiterer bevorzugter Ausgestaltung der Erfindung dadurch, daß die Meßwerte der an einem Antriebsorgan der verfahrbaren Rohrspanneinheit angeordneten Meßreinrichtung mit gleichzeitig gemessenen Werten der Stromaufnahme des elektrischen Antriebsmotors verglichen werden. Da auch die Stromaufnahme ein Maß für die Vorschubkraft ist, sollten die Abweichungen zwischen den am mechanischen Antriebsstrang gemessenen Kraft-Werten und den aus der Stromaufnahme ermittelten Werten für die Vorschubkraft ein bestimmtes Maß nicht überschreiten.

Die Stromüberwachung kann auch noch auf den durch einen Elektromotor angetriebenen, rotierenden Hobel ausgedehnt werden. Sollte sich in einer der zu verschweißenden Rohrendflächen eine tiefe Kerbe befinden, so macht sich dies während der Hobeloperation durch einen unterbrochenen Schnitt und damit auch in der Stromaufnahmekurve bemerkbar. Durch Überwachung der Stromaufnahme des Hobels kann zunächst festgestellt werden, ob sich Kerben oder andere Unregelmäßigkeiten in den zu verschweißenden Flächen befinden, und dann kann der Hobelvorgang automatisch solange fortgesetzt werden, bis die Unregelmäßigkeiten beseitigt sind.

Nachstehend werden verschiedene Ausführungsbeispiele der erfindungsgemäßen Rohrschweißvorrichtung anhand der beiliegenden Zeichnungen näher erläutert. Es zeigen:
- Fig. 1: eine perspektivische Darstellung, zum Teil als Explosionsdarstellung, einer elektrisch antreibbaren Spannvorrichtung mit zwei Rohrspanneinheiten, zu denen jeweils zwei axial fest miteinander verbundene Rohr-Spannelemente gehören;
- Fig. 2: eine weitere perspektivische Darstellung, zum Teil in Explosionsdarstellung, der Spannvorrichtung nach Fig. 1;
- Fig. 3: eine perspektivische Darstellung eines Rohrhobels zur Glättung der Endflächen der zu verschweißenden Rohre;
- Fig. 4: eine perspektivische Darstellung eines plattenförmigen Heizelements zur Erwärmung der zu verschweißenden Rohrenden auf die Schweißtemperatur;
- Fig. 5: einen axialen Längsschnitt durch eine gegenüber Fig. 1 und 2 abgewandelte Ausführungsform einer elektromotorisch antreibbaren Spannvorrichtung;
- Fig. 6: einen vereinfachten Querschnitt durch die Spannvorrichtung nach Fig. 5;
- Fig. 7: eine perspektivische Darstellung der Rohr-Spannelemente nach Fig. 1 und 2 mit eingespannten Rohrenden in verschiedenen Arbeitsphasen, nämlich A: beim Hobeln, B: beim Anwärmen und C: beim Fügen;
- Fig. 8: eine schematische Darstellung der Arbeitsvorgänge, und zwar A: beim Anwärmen, B: beim Fügen, C: der fertigen Verbindung;
- Fig. 9: ein Druck/Zeit-Diagramm des gesamten Schweißvorgangs.

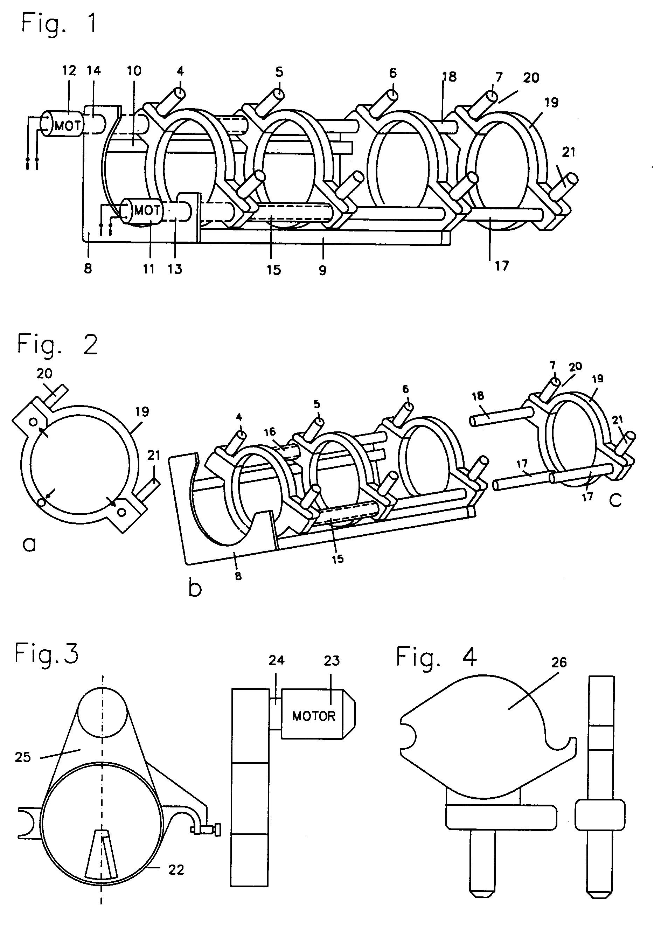

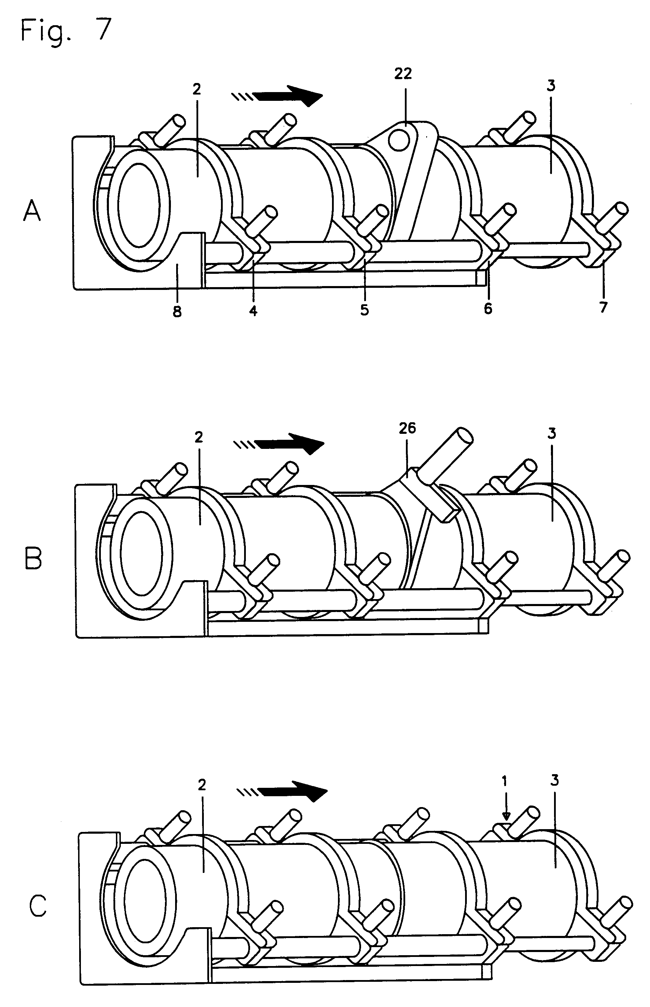

Fig. 1 zeigt den wesentlichen Teil einer Vorrichtung zum Stumpfschweißen von Rohren aus thermoplastischen Kunststoffen, nämlich eine Spannvorrichtung 1, welche zum Spannen von zwei miteinander zu verbindenden Rohrenden 2, 3 (siehe Fig. 7) zwei Rohrspanneinheiten aufweist, deren eine aus zwei axial fest miteinander verbundenen Rohr-Spannelementen 4, 5 und deren andere ebenfalls aus zwei fest miteinander verbundenen Rohr-Spannelementen 6, 7 besteht. Die Spannelemente 6, 7 sind fest mit einem Traggerüst verbunden, zu dem am anderen Ende der Spannvorrichtung 1 ein Element 8 gehört. Außerdem gehören zum Traggerüst zwei mit Zwischenabstand angeordnete Achsen 9, 10, längs derer die Spannelemente 4, 5 als Einheit relativ zu den Spannelementen 6, 7 verfahrbar sind, wobei die geradlinig hintereinander ausgerichteteten Spannelemente 4 - 7 in axialer Flucht bleiben.

Für die Durchführung des Bewegungsvorgangs sorgen zwei Elektromotoren 11, 12, die Gewindespindeln 13, 14 rotierend antreiben, welche parallel zu den Achsen 9, 10 im Traggerüst drehbar und axial unverschieblich gelagert sind und mit an den Spannelementen 4 und/oder 5 undrehbar angebrachten Innengewinden zusammenwirken. Im Beispielsfall sind die Spannelemente 4 und 5 durch Verbindungsbolzen 15, 16 zu einer starren Rohrspanneinheit verbunden, so daß dann, wenn eines dieser Spannelemente durch die Gewindespindeln 13, 14 axial angetrieben wird, es das andere Spannelement mitnimmt. Zum Einspannen der Rohrenden 2 und 3 ist jedes im wesentlichen ringförmige Spannelement 4 - 7 mittig geteilt, wobei die eine Hälfte ein mittels Schraubenbolzen und von Hand betätigbarer Muttern 20, 21 festklemmbares Klemmstück 19 bildet. Zur Anpassung an unterschiedliche Rohrdurchmesser lassen sich nicht dargestellte Füllelemente in jedes Spannelement 4 - 7 einsetzen.

Die Figuren 2 a - c zeigen eine zum Teil demontierte Spannvorrichtung 1, um deren Aufbau zu verdeutlichen. So zeigt Fig. 2 a eine Endansicht eines Rohr-Spannelements und die Zusammenstellung der Figuren 2 b und 2 c in Explosionsdarstellung die Verbindung des Spannelements 7 mit dem Spannelement 6 durch Verschraubung mittels Bolzen 17, 17' und 18.

Fig. 3 zeigt eine perspektivische Darstellung eines an sich bekannten Rohrhobels 22 zum Hobeln der Stirnflächen der zu verschweißenden Rohrenden 2 und 3. Sein Einsatz ist in Fig. 7 A dargestellt. Der Drehantrieb des mit rotierenden Messern arbeitenden Rohrhobels 22 erfolgt mit Hilfe eines Elektromotors 23, welcher über eine starre oder auch biegsame Welle 24 mit dem Getriebe 25 des Hobels verbunden ist.

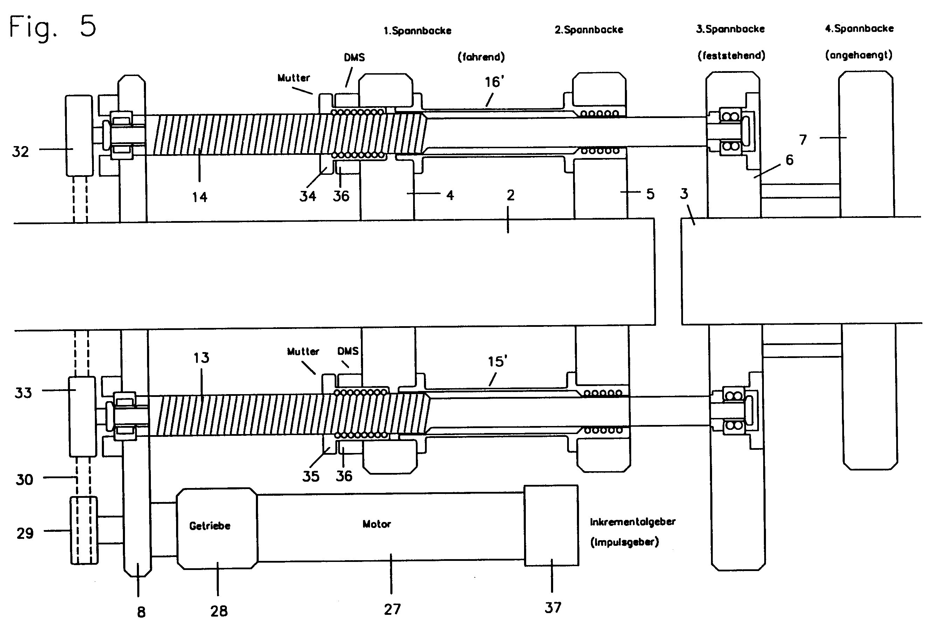

Fig. 4 zeigt ein plattenförmiges Heizelement 26, dessen Einsatz in Fig. 5 B dargestellt ist. Es kann direkt oder indirekt über einen Wärmeleiter beheizt sein. Im letzteren Fall wird die Wärme von eingebetteten elektrischen Heizkörpern bzw. Wärmeträgern durch einen gut wärmeleitenden Werkstoff zur Oberfläche des Heizelements übertragen. Bei dem in Fig. 4 dargestellten, direkt beheizten Element 26 wird die Wärme durch einen elektrischen Widerstand erzeugt und direkt an die Rohrenden abgegeben. Hierbei wird der als Heizband, Heizwendel oder Heizring ausgebildete elektrische Widerstand selbst als Heizelement genutzt. Das Heizelement 26 muß jeweils in Form und Abmessungen den Fügeflächen der Rohrenden 2 und 3 angepaßt sein. Die zu verschweißenden Flächen der Rohrenden müssen innerhalb der gegenüberliegenden, planparallelen Nutzflächen des Heizelements 26 liegen. Hierbei gilt als Nutzfläche der Teil des Heizelements, in dem die Temperatur und die abzugebende Wärmemenge innerhalb des geforderten Bereiches regelbar sind. Die Oberfläche des Heizelements 26 ist normalerweise mit einer Beschichtung oder Bespannung z.B. aus PTFE versehen, poliert oder in anderer Weise veredelt, um das Anhaften des erwärmten thermoplastischen Kunststoffs zu vermeiden.

Nicht dargestellt ist bei dem bisher beschriebenen Ausführungsbeispiel, daß zwischen den relativ zueinander verfahrbaren Rohrspanneinheiten 4, 5 und 6, 7 Druck- und Temperatursensoren angeordnet sind, deren Meßwerte einer Steuer-und Regelvorrichtung zuführbar sind, die mit einem programmierbaren Rechner verbunden ist, welcher die einzelnen Arbeitsabläufe für den gesamten Schweißvorgang unter Verwendung der von den Sensoren aufgenommenen Werte automatisch steuert.

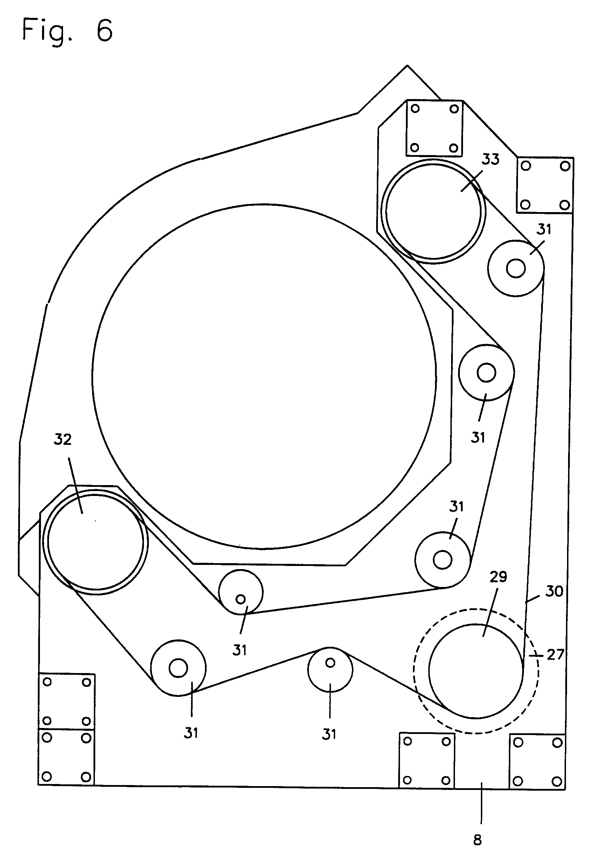

Während bei der Ausführung nach Fig. 1 und 2 der Antrieb der beiden Gewindespindeln 13, 14 jeweils einzeln durch Motoren 11, 12 erfolgt, die elektrisch synchron gesteuert werden müssen, ist in Fig. 5 und 6 ein Ausführungsbeispiel dargestellt, bei dem beide Gewindespindeln 13, 14 durch einen einzigen Motor 27 angetrieben werden. Dieser ist mitsamt einem angeflanschten Getriebe 28 in achsparalleler Lage neben den Gewindespindeln 13, 14 am endseitigen Element 8 des Traggerüsts befestigt und treibt eine Zahnriemenscheibe 29 an, die das Drehmoment über einen Zahnriemen 30, der gemäß Fig. 6 über mehrere Umlenk- und Spannrollen 31 läuft, auf drehfest mit den Gewindespindeln 13, 14 verbundene Riemenscheiben 32, 33 überträgt.

Bei der Spannvorrichtung nach Fig. 5 und 6 sind die Gewindespindeln 13, 14 im Spannelement 6 und im Endelement 8 des Traggerüsts mittels Wälzlagern radial gelagert. Das Axiallager der Gewindespindeln 13, 14 befindet sich im Spannelement 6. Dieses sowie das mit ihm über die Bolzen 17, 18 axial fest verbundene Spannelement 7 sind auf dem mit 3 bezeichneten Ende des bereits verlegten langen Rohrstrangs festgeklemmt. Die auf dem Ende 2 eines an den Rohrstrang 3 anzuschweißenden Rohrstücks festgeklemmten Spannelemente 4 und 5 sind durch Distanzbüchsen 15', 16' starr miteinander verbunden, welche koaxial zu den durch sie hindurchgeführten Gewindespindeln 13, 14 angeordnet sind. Der Gewindeabschnitt der Gewindespindeln 13 und 14 reicht nur soweit wie der Verfahrweg des Spannelements 4. Das Spannelement 5 ist lediglich mittels Wälzkörpern axial verschieblich auf einem nicht mit Gewinde versehenen vorderen Teil der Gewindespindeln 13, 14 axial verschieblich geführt.

Die Gewindespindeln 13, 14 sind im Ausführungsbeispiel nach Fig. 5 Kugelumlaufspindeln, die mit drehfest am Spannelement 4 befestigten Kugelumlaufmuttern 34, 35 zusammenwirken. Letztere übertragen die auf sie durch die Gewindespindeln 13, 14 ausgeübten Druckkräfte allerdings nicht direkt auf das Spannelement 4 und das mit diesem über die Distanzbüchsen 15', 16' verbundene Spannelement 5, sondern unter Zwischenschaltung jeweils einer Kraftmeßeinrichtung 36, welche im Beispielsfall die Form eines Ringes hat, der mit zwei diametral gegenüberliegend angeordneten Vorsprüngen am Spannelement 4 und mit zwei um 90° zu diesen Vorsprüngen versetzten weiteren axialen Vorsprüngen jeweils an einer Kugelumlaufmutter 34 bzw. 35 abgestützt ist und jeweils zwischen zwei Vorsprüngen Dehnungsmeßstreifen trägt. Bei Druckbelastung biegen sich die vier Abschnitte des Ringes zwischen den Vorsprüngen, und die mittels der Dehnungsmeßstreifen gemessene elastische Verformung des Ringes ist ein Maß für die von dem Ring auf das Spannelement 4 übertragene Druckkraft. Die Anordnung von vier Dehnungsmeßstreifen, die in Form einer Wheatstone-Brücke geschaltet sind, ergibt ein genaueres Meßergebnis als mit nur einem einzigen Dehnungsmeßstreifen an einem durch die von einer Kugelumlaufmutter 34, 35 auf das Spannelement 4 übertragenen Kraft elastisch verformbaren Zwischenglied.

Es versteht sich, daß die Meßeinrichtung 36 auch an einem anderen mechanischen Antriebsorgan der verfahrbaren Rohrspanneinheit 4, 5 angeordnet und z.B. auch als Druckmeßeinrichtung oder Drehmomentmeßeinrichtung funktionieren kann. In der in Fig. 5 gezeigten Anordnung der Meßeinrichtung 36 unmittelbar zwischen der Rohrspanneinheit 4, 5 und dem direkt vorgelagerten Antriebsorgan 34, 35 besteht allerdings der Vorteil, daß gerade die auf das verschiebliche Rohrende 2 wirkende äußere Kraft gemessen wird, und keine Reibungskräfte mehr berücksichtigt werden müssen.

Die getroffene Anordnung der Meßeinrichtung im mechanischen Antriebsstrang der verfahrbaren Rohrspanneinheit 4, 5 berücksichtigt, daß das Rohrende 3 der bereits verlegten langen Rohrleitung unverrückbar festliegt. Man kann also nicht, wie bei einer nur in einer Werkstatt zur Anwendung kommenden Spannvorrichtung, die gegenseitige Anpreßkraft der Rohrenden 2, 3 dadurch messen, daß man zwischen die Rohrspanneinheit 6, 7 und ein am Boden abgestütztes Traggerüst eine Kraftmeßeinrichtung einschaltet. Wegen der normalerweise unverrückbar festen Lage des Rohrendes 3 der bereits verlegten Rohrleitung spielt es prinzipiell auch keine Rolle, ob sich das Traggerüst 8, an welchem der Motor 27 gelagert ist, am Boden oder am Ende 3 der Rohrleitung axial abstützt. Die zuletzt genannte Ausführung hat lediglich den Vorteil, daß die Verankerung des Traggerüsts 8 mittels der fest mit ihr verbundenen Rohrspanneinheit 6, 7 am festliegenden Rohrende 3 einfach und schnell durchzuführen ist. Unabhängig davon, ob die einen Teil des Traggerüsts bildenden Gewindespindeln 13, 14 am Boden oder am Ende des festliegenden Rohrstrangs 3 axial abgestützt sind, besteht selbstverständlich auch die Möglichkeit, mit einer Kraftmeßeinrichtung entsprechend der Meßeinrichtung 36 die am Axiallager der Gewindespindeln 13, 14 abgestützte Reaktionskraft zu messen, welche mit der auf die angetriebene Rohrspanneinheit 4, 5 ausgeübten Vorschubkraft übereinstimmt.

Mit der Meßeinrichtung 36 sind nur Druckkräfte zu messen. Dies genügt für die Praxis. Wenn damit zu rechnen ist, daß das Ende 2 des verschiebbaren Rohrstücks an einem Abhang infolge Schwerkraft die Tendenz hat, gegen das Rohrende 3 zu drücken, könnte zur Messung der dagegen aufzubringenden Stützkraft zusätzlich jeweils eine weitere Meßeinrichtung 36 auf der mit Bezug auf Fig. 5 rechten Seite des Spannelements 4 zwischen diesem und einem rechten Endflansch einer in diesem Fall sich axial vollständig durch das Spannelement 4 erstreckenden Kugelumlaufmutter 34, 35 vorgesehen werden. Im übrigen hat der bevorzugte Antrieb der Rohrspanneinheit 4, 5 über Schraubgetriebe 13, 35 und 14, 34 den Vorteil, daß sie bei Ausfall des elektrischen Antriebs das Rohrende 2 durch Selbsthemmung halten.

Wie aus Fig. 5 ersichtlich, ist am Elektromotor 27 ein Inkrementalgeber 37 angebracht, welcher den Drehweg des Läufers des Motors in kleinen Winkelschritten erfaßt, wobei jedem Winkelschritt ein sehr kleiner Verschiebeweg der Rohrspanneinheit 4, 5 entspricht. Mit dieser Wegmeßeinrichtung und ggf. einem Taktgeber in der Steuer- und Regeleinrichtung des Motors 27 besteht die Möglichkeit, die Relativbewegung der Rohrenden 2, 3 beim Fügen, d.h., den Fügeweg und die Geschwindigkeit des Ineinanderdringens der Rohrenden, genau zu erfassen und mit vorgegebenen Sollwerten zu vergleichen. In gleicher Weise kann die Verformung der Rohrenden 2, 3 beim Anwärmvorgang kontrolliert und, falls gewünscht, protokolliert werden. Außerdem können Abweichungen von den vorgegebenen Weg- und/oder Geschwindigkeits-Sollwerten in die Regelung des Motordrehmoments einbezogen werden, mit dem die Vorschubkraft des Rohrendes 2 erzeugt wird.

Wegen der Abhängigkeit des Drehmoments von der Stromaufnahme des Motors 27 wird vorzugsweise auch diese von der Regeleinrichtung erfaßt und mit den Meßwerten der Meßeinrichtung 36 verglichen. Abweichungen zwischen den aus der Stromaufnahme errechneten Drehmoment- bzw. Kraftwerten und den Meßwerten der Meßeinrichtung 36 am Spannelement 4 sind auf die ggf. schwankende Reibung im Antriebsstrang der verfahrbaren Rohrspanneinheit 4, 5 zurückzuführen.

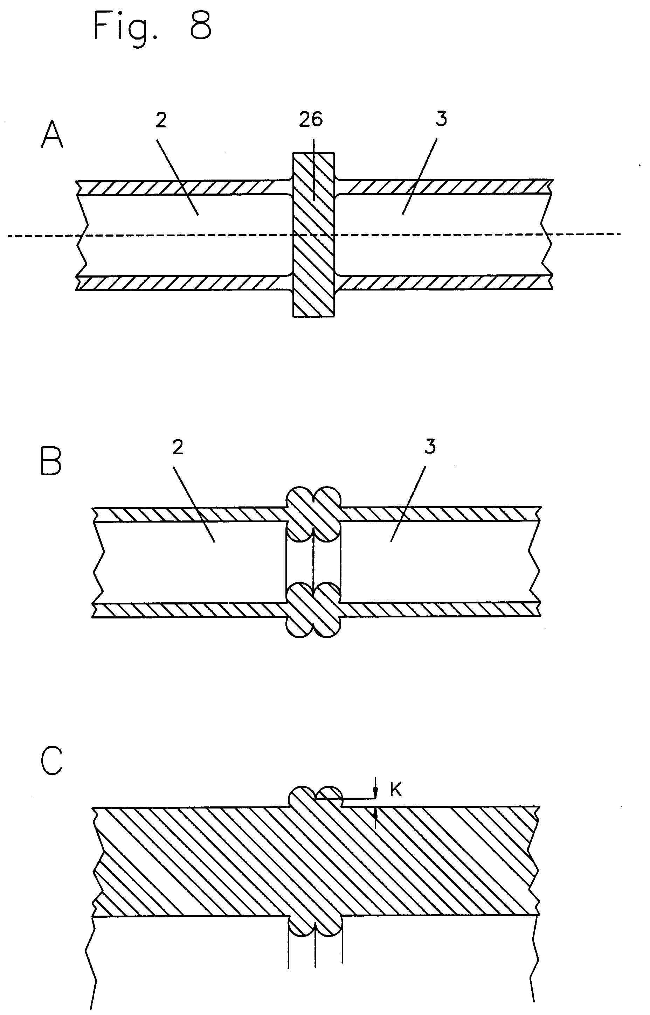

Die Figuren 7 A - C zeigen in Verbindung mit Fig. 8 A - C und Fig. 9 die verschiedenen Verfahrensschritte: Zunächst werden gemäß Fig. 7 A die Rohrenden 2 und 3 mit Hilfe des Hobels 22 auf ihren Stirnflächen plangehobelt. Hierzu werden die Rohrenden 2 und 3 sowie der Hobel 22 in die Spanneinrichtung 1 so eingespannt, daß der axial verschieblich gelagerte Hobel an beiden Rohrenden anliegt. Dann werden die Motoren 11, 12 gemäß Fig. 1 bzw. der Motor 27 gemäß Fig. 5 und der Antriebsmotor 23 des Hobels 22 eingeschaltet, und mit Hilfe der nicht näher dargestellten Steuervorrichtung wird der gesamte Prozeß gesteuert. Wie oben erwähnt, läßt hierbei die Überwachung der Stromaufnahme des Motors 23 erkennen, ob Kerben oder Unregelmäßigkeiten in den Stirnflächen der Rohrenden 2, 3 vorhanden sind.

Anschließend wird der Hobel 22 entfernt und die Heizeinrichtung 26 zwischen den Rohrenden 2, 3 in die Spanneinrichtung 1 eingesetzt, wie dies in Fig. 5 B dargestellt ist. Auch die Heizeinrichtung 26 ist axial verschieblich am Traggerüst gelagert, so daß sie nach dem zum Entfernen des Hobels 22 zweckmäßigen Zurückziehen des Rohrendes 2 und dessen anschließendem Vorschieben in Richtung des Rohrendes 3 zwischen beiden Rohrenden 2, 3 eingespannt wird.

Gemäß Fig. 9 werden in einer ersten Phase die Rohrenden 2, 3 während einer bestimmten Angleichzeit mit einem bestimmten Angleichdruck gegen die erwärmte Heizplatte angedrückt. Hierbei soll eine begrenzte Verformung des erwärmten Materials stattfinden, um nach der spanenden Bearbeitung evtl. vorhandene Ungleichmäßigkeiten zu beseitigen. Nach dieser begrenzten Verformung, die zur absolut planparallelen Angleichung der zu verschweißenden Stirnflächen der Rohrenden 2, 3 führt, wird der Druck auf die Rohrenden soweit reduziert, daß nur noch eine wärmeübertragende Anlage am Heizelement gewährleistet ist, aber keine weitere Verformung mehr stattfindet. Man würde sonst das erwärmte Material verdrängen und dadurch die Tiefe der erwärmten Zone verringern.

Nach der in Fig. 9 gezeigten Anwärmzeit haben die Rohrenden 2, 3 die zum Verschweißen notwendige Temperatur. Jetzt muß innerhalb einer kurzen Umstellzeit das Rohrende 2 durch die Rohrspanneinheit 4, 5 zurückgezogen, die Heizeinrichtung 26 entfernt und dann zum Fügen das Rohrende 2 wieder vorgefahren und gegen das Rohrende angedrückt werden. Dabei wird der Fügedruck mit einem bestimmten Gradienten aufgebaut und dann während einer bestimmten Abkühlzeit aufrechterhalten, wie aus Fig. 9 ersichtlich. Das Fügen ist in Fig. 7 C und in Fig. 8 B veranschaulicht. Fig. 8 C zeigt dann einen Längsschnitt durch die fertige Schweißverbindung.

## Patentansprüche

1. Vorrichtung zum Stumpfschweißen von Rohren aus thermoplastischem Kunststoff mit zwei relativ zueinander in Flucht ausgerichteten Rohrspanneinheiten (4, 5; 6, 7), von denen die eine (4, 5) mit einem darin eingespannten Rohrende (2) durch einen Elektromotor (11, 12; 27) über mechanische Antriebsorgane (12, 14; 28 - 35) in Fluchtrichtung verfahrbar und mit einer durch eine Meßeinrichtung (36) meßbaren Kraft gegen ein in der zweiten Rohrspanneinheit (6, 7) eingespanntes Rohrende (3) andrückbar ist, wobei der Elektromotor (11, 12; 27) in einem geschlossenen Regelkreis in Abhängigkeit der Meßwerte einer Kraft-, Druck- oder Drehmoment-Meßeinrichtung (36) regelbar ist, die an einem mechanischen Antriebsorgan (34, 35) der verfahrbaren Rohrspanneinheit (4, 5) angeordnet ist, **dadurch gekennzeichnet**, daß das Drehmoment des Elektromotors (11, 12; 27) regelbar ist und die Reaktionskraft der durch den Elektromotor (11, 12; 27) erzeugten axialen Vorschubkraft über die zweite Rohrspanneinheit (6, 7) an einem ortsfest liegenden Rohrende (3) abstützbar ist.

2. Vorrichtung nach Anspruch 2, **dadurch gekennzeichnet**, daß die Meßeinrichtung (36) zwischen der verfahrbaren Rohrspanneinheit (4, 5) und dem dieser unmittelbar vorgeschalteten mechanischen Antriebsorgan (34, 35) angeordnet ist.

3. Vorrichtung nach Anspruch 1 oder 2, **dadurch gekennzeichnet**, daß der Elektromotor (11, 12; 27) wenigstens eine Gewindespindel (13, 14) rotierend antreibt, die an der einen Rohrspanneinheit (6, 7) axial festgelegt ist und mit einer Mutter, insbesondere einer Kugelumlaufmutter (34, 35), zusammenwirkt, die drehfest mit der anderen Rohrspanneinheit (4, 5) verbunden ist.

4. Vorrichtung nach Anspruch 3, **dadurch gekennzeichnet**, daß der Elektromotor (11, 12; 27) über zwei rotierend angetriebene Gewindespindeln (13, 14) auf zwei Muttern (34, 35) wirkt, die an der mit ihnen drehfest verbundenen Rohrspanneinheit (4, 5) diametral gegenüberliegend angeordnet sind und jeweils über eine Meßeinrichtung (36) eine axiale Kraft auf die Rohrspanneinheit (4, 5) ausüben.

5. Vorrichtung nach Anspruch 4, **dadurch gekennzeichnet**, daß die Meßeinrichtungen (36) unter axialer Belastung der Muttern (34, 35) auf Biegung beanspruchte Glieder enthalten, an denen Dehnungsmeßstreifen angebracht sind.

6. Vorrichtung nach Anspruch 5, **dadurch gekennzeichnet**, daß die auf Biegung beanspruchten Glieder Ringe sind, die jeweils auf einer axialen Seite über zwei diametral gegenüberliegende axiale Vorsprünge an der Mutter (34, 35) und auf der anderen Seite über zwei ebenfalls diametral gegenüberliegende Vorsprünge, die jeweils am Umfang um 90° zu den erstgenannten Vorsprüngen versetzt angeordnet sind, an der Rohrspanneinheit (4, 5) abgestützt sind, wobei jeweils zwischen den Vorsprüngen am Ring Dehnungsmeßstreifen angebracht sind.

7. Verfahren zum Stumpfschweißen von Rohren aus thermoplastischem Kunststoff mit einer Vorrichtung nach einem der Ansprüche 1 bis 6, bei welchem die beiden Rohrenden in zwei relativ zueinander ausgerichteten Rohrspanneinheiten (4, 5, 6, 7) eingespannt und auf eine bestimmte Schweißtemperatur erwärmt werden und das erste Rohrende (2) durch einen Elektromotor (11, 12, 27) über mechanische Antriebsorgane (12, 14, 28 - 35) mit einer durch eine Meßeinrichtung (36) meßbaren Kraft gegen das zweite Rohrende (3) angedrückt wird, **dadurch gekennzeichnet**, daß während des gegenseitigen Andrucks der Rohrenden (2, 3) mit einem bestimmten Fügekraftaufbau die Relativbewegung der Rohre gemessen und mit vorgegebenen Grenzwerten verglichen wird, wobei eine Regelung des Drehmomentes des Elektromotors vorgenommen wird, und daß die Reaktionskraft der durch den Elektromotor erzeugten axialen Vorschubkraft über die zweite Rohrspanneinheit (6, 7) an dem ortsfest liegenden zweiten Rohrende (3) abgestützt wird.

8. Verfahren nach Anspruch 7, **dadurch gekennzeichnet**, daß beim Erwärmen der Rohrenden (2, 3) auf Schweißtemperatur durch axialen Andruck gegen eine zwischen sie eingeführte Heizeinrichtung (26) die Relativbewegung der Rohre (2, 3) gemessen und mit vorgegebenen Grenzwerten verglichen wird.

9. Verfahren nach Anspruch 7, **dadurch gekennzeichnet**, daß die Endflächen der zu verschweißenden Rohrenden (2, 3) durch einen elektrisch angetriebenen, rotierenden Hobel (22) spanend bearbeitet werden, dessen Stromaufnahme gemessen und mit vorgegebenen Grenzwerten verglichen wird, dann durch axialen Andruck gegen eine Heizeinrichtung (26) auf eine bestimmte Schweißtemperatur erwärmt und dann mit einer bestimmten Fügekraft gegeneinander gedrückt werden.

10. Verfahren nach Anspruch 7, **dadurch gekennzeichnet**, daß die Rohrenden (2, 3) durch axialen Andruck gegen eine Heizeinrichtung (26) auf eine bestimmte Schweißtemperatur erwärmt und dann mit einer bestimmten Fügekraft gegeneinander gedrückt werden, wobei die auf eine verfahrbare Rohrspanneinheit (4, 5) ausgeübte Vorschubkraft durch eine an einem mechanischen Antriebsorgan (34, 35) der Rohrspanneinheit (4, 5) angeordnete Meßeinrichtung (36) direkt oder indirekt gemessen wird und die Meßwerte der Meßeinrichtung (36) mit gleichzeitig gemessenen Werten der Stromaufnahme des elektrischen Antriebsmotors (11, 12; 27) verglichen werden.

## Claims

1. An apparatus for the butt-welding of tubes of thermoplastic plastics material with two tube clamping units (4,5;6,7) aligned relative to one another, one of which (4,5) can be conveyed with a tube end (2) clamped therein by an electric motor (11,12;27) via mechanical drive members (12,14;28-35) in the alignment direction and can be pressed with a force, which can be measured by a measuring device (36), against a tube end (3) clamped in the second tube clamping unit (6,7), wherein the electric motor (11,12;27) can be controlled in a closed-loop control system in response to the measured values of a force, pressure or torque-measuring device (36) which is mounted on a mechanical drive member (34,35) of the conveyable tube-clamping unit (4,5), characterised in that the torque of the electric motor (11,12;27) is controllable and the reaction force of the axial feed force generated by the electric motor (11,12;27) is supportable via the second tube clamping unit (6,7) at a stationary tube end (3).

2. An apparatus according to Claim 2, characterised in that the measuring device (36) is disposed between the conveyable tube-clamping unit (4,5) and the mechanical drive member (34,35) disposed immediately in front thereof.

3. An apparatus according to Claim 1 or 2, characterised in that the electric motor (11,12;27) drives at least one threaded spindle (13,14) in rotating motion, which is axially fixed on one tube clamping unit (6,7) and co-operates with a nut, in particular a recirculating ball nut (34,35) which is connected with the other tube-clamping unit (4,5) in a manner precluding relative rotation.

4. An apparatus according to Claim 3, characterised in that the electric motor (11,12;27) acts via two threaded spindles (13,14) driven in rotating motion on two nuts (34,35) which are arranged diametrically opposed on the tube-clamping unit (4,5) which is connected to them in a manner precluding relative rotation and in each case exert an axial force on the tube-clamping unit (4,5) via a measuring device (36).

5. An apparatus according to Claim 4, characterised in that under axial loading of the nuts (34,35) the measuring devices (36) include members which are subject to bending load and to which strain gauges are applied.

6. An apparatus according to Claim 5, characterised in that the members subject to bending load are rings, which in each case are supported on one axial side via two diametrically opposed axial projections on the nut (34,35) and on the other side via two likewise diametrically opposed projections, which are each arranged offset on the periphery by 90° with respect to the first-mentioned projections, on the tube-clamping unit (4,5), wherein in each case between the projections strain gauges are applied to the ring.

7. A method for the butt-welding of tubes of thermoplastic plastics material with an apparatus according to any one of Claims 1 to 6, in which the two tube ends are clamped in two tube-clamping units (4,5,6,7) aligned relative to one another and are heated to a given welding temperature, and the first tube end (2) is pressed by an electric motor (11,12,27) via mechanical drive members (12,14,28-35) with a force which can be measured by a measuring device (36) against the second tube end (3), characterised in that during the mutual pressing of the tube ends (2,3) with a given jointing force build-up the relative movement of the tubes is measured and is compared with predetermined limit values, regulation of the torque of the electric motor being carried out, and in that the reaction force of the axial feed force generated by the electric motor is supported via the second tube-clamping unit (6,7) at the stationary second tube end (3).

8. An apparatus according to Claim 7, characterised in that during the heating of the tube ends (2,3) to welding temperature by being pressed axially against a heating device (26) introduced between them the relative movement of the tubes (2,3) is measured- and compared with predetermined limit values.

9. An apparatus according to Claim 7, characterised in that the end faces of the tube ends (2,3) to be welded are machined by an electrically driven rotating plane (22), the power consumption of which is measured and compared with predetermined limit values, then they are heated to a given welding temperature by being pressed axially against a heating device (26) and are then pressed against one another with a given jointing force.

10. An apparatus according to Claim 7, characterised in that the tube ends (2,3) are heated to a given welding temperature by being pressed axially against a heating device (26) and are then pressed against one another with a given jointing force, wherein the feed force exerted on a conveyable tube-clamping unit (4,5) is measured directly or indirectly by a measuring device (36) mounted on a mechanical drive member (34,35) and the measured values of the measuring device (36) are compared with simultaneously measured values of the power consumption of the electric drive motor (11,12;27).

## Revendications

1. Dispositif pour souder bout à bout des tubes en matière thermoplastique à l'aide de deux unités de serrage de tube (4, 5 ; 6, 7) alignées l'une par rapport à l'autre, et dont l'une (4, 5) peut être déplacée avec l'extrémité de tube (2), enserrée, par un moteur électrique (11, 12 ; 27) par des organes d'entraînement mécanique (12, 14 ; 28-35) dans la direction de l'alignement pour être pressée selon une force mesurable par une installation de mesure (36), contre une extrémité de tube (3) serrée dans la seconde unité de serrage de tube (6, 7), le moteur électrique (11, 12; 27) étant réglable selon un circuit de régulation fermé en fonction des valeurs de mesure d'une installation de mesure de force, de pression ou de couple (36) prévue sur un organe d'entraînement mécanique (34, 35) de l'unité de serrage de tube (4, 5) susceptible de se déplacer,
caractérisé en ce que
le couple du moteur électrique (11, 12 ; 27) est réglable et la force de réaction de la force axiale d'avancée générée par le moteur électrique (11, 12 ; 27) s'appuie par la seconde unité de serrage de tube (6, 7) contre une extrémité de tube (3) stationnaire.

2. Dispositif selon la revendication 2,
caractérisé en ce que
l'installation de mesure (36) est prévue entre l'unité de serrage de tube (4, 5) mobile et l'organe d'entraînement (34, 35), mécanique, qui précède directement cette unité.

3. Dispositif selon la revendication 1 ou 2,
caractérisé en ce que
le moteur électrique (11, 12 ; 27) entraîne en rotation au moins une broche filetée (13, 14) fixée axialement à l'une des unités de serrage de tube (6, 7), et coopérant avec un écrou notamment un écrou rotatif à billes (34, 35) solidaire en rotation de l'autre unité de serrage de tube (4, 5).

4. Dispositif selon la revendication 3,
caractérisé en ce que
le moteur électrique (11, 12 ; 27) agit par deux broches filetées (13, 14) entraînée en rotation sur deux écrous (34, 35) prévus de manière diamétralement opposée sur l'unité de serrage de tube (4, 5) reliée solidairement à ceux-ci et exerçant chaque fois par une installation de mesure (36), une force axiale sur l'unité de serrage de tube (4, 5).

5. Dispositif selon la revendication 4,
caractérisé en ce que
les installations de mesure (36) comportent des éléments sollicités en flexion sous la charge axiale des écrous (34, 35), ces éléments comportant des jauges de contraintes.

6. Dispositif selon la revendication 5,
caractérisé en ce que
les éléments sollicités en flexion sont des anneaux prévus chaque fois d'un côté axial, par deux saillies diamétralement opposées, axialement sur l'écrou (34, 35) et de l'autre côté par deux saillies également opposées de manière diamétrale, qui sont décalées chaque fois à la périphérie, de 90° par rapport aux premières saillies, en s'appuyant sur l'unité de serrage de tube (4, 5), et chaque fois entre les saillies, des jauges de contraintes sont prévues sur l'anneau.

7. Procédé de soudage bout à bout de tube en matière thermoplastique à l'aide d'un dispositif selon l'une quelconque des revendications 1 à 6 selon lequel, les deux extrémités de tube sont serrées dans des unités de serrage de tube alignées l'une par rapport à l'autre (4, 5, 6, 7) et sont chauffées à une certaine température de soudage et en ce que la première extrémité de tube (2) est pressée par un moteur électrique (11, 12 ; 27), par des organes d'entraînement mécanique (12, 14 ; 28-35) selon une force mesurable par une installation de mesure (36) contre la seconde extrémité de tube (3),
caractérisé en ce que
pendant l'application réciproque des extrémités de tube (2, 3), avec une certaine force de jonction, on mesure le mouvement relatif des tubes, on le compare à des valeurs limites prédéterminées et on régule le couple du moteur électrique et en ce qu'on soutient la force de réaction de la force de poussée axiale générée par le moteur électrique par la seconde unité de serrage de tube (6, 7) de la seconde extrémité de tube (3), stationnaire.

8. Procédé selon la revendication 7,
caractérisé en ce qu'
en chauffant les extrémités de tube (2, 3) à la température de soudage, on mesure le mouvement relatif des tubes (2, 3) par la pression d'application axiale contre une installation de chauffage (26) introduite entre les extrémités de tube, et on le compare à des valeurs limites prédéterminées.

9. Procédé selon la revendication 7,
caractérisé en ce que
les surfaces d'extrémité des tubes (2, 3) à souder sont usinées par un rabot (22) rotatif entraîné électriquement dont on mesure le courant électrique utilisé qu' on compare à des valeurs limites prédéterminées, puis sont presseés axialement contre une installation de chauffage (26) chauffé à une température de soudage déterminée, et puis sont pressées l'une contre l'autre selon une force de jonction définie.

10. Procédé selon la revendication 7,
caractérisé en ce qu'
on chauffe les extrémités de tube (2, 3) par pression axiale contre une installation de chauffage (26) à une température de soudage définie, puis on les presse l'une contre l'autre selon une force de jonction définie, la force d'avancée exercée par une unité de serrage de tube (4, 5), susceptible de se déplacer, étant mesurée directement ou indirectement par une installation de mesure (36) prévue sur un organe d'entraînement mécanique (34, 35) de l'unité de serrage de tube (4, 5), et on compare les valeurs de mesure de l'installation de mesure (36) à des valeurs mesurées simultanément correspondant au courant électrique reçu par le moteur électrique (11, 12 ; 27).
